# EUROPÄISCHE PATENTANMELDUNG

(11) **EP 2 647 855 A2**
(43) Veröffentlichungstag der Anmeldung: **09.10.2013**
(21) Anmeldenummer: 13161210.3
(22) Anmeldetag: 27.03.2013
(51) Int. Cl.: F16C 13/04, F24J 2/54

(54) **Lagereinheit für eine Solarkraftwerkseinheit**

(30) Priorität: 03.04.2012 DE 102012205486
(71) Anmelder: Aktiebolaget SKF, 41550 Göteborg (SE)
(72) Erfinder: Behn, Markus, 31199 Diekholzen (DE); Breunig, Heinz, 63743 Aschaffenburg (DE); Kaiser, Tristan, 74388 Talheim (DE); Kern, Henning, 97422 Schweinfurt (DE); Liesegang, Hans-Jürgen, 26419 Schortens (DE); Noeth, Mathias, 97535 Wasserlosen (DE); Pfeuffer, Christina, 97776 Eußenheim (DE); Seuberling, Mathias, 97633 Großeibstadt (DE)
(74) Vertreter: Schonecke, Mitja

(57) **Zusammenfassung**

Die Erfindung geht aus von einer Lagereinheit für eine Solarkraftwerkseinheit, insbesondere für eine Solarkraftwerksspiegeleinheit, mit wenigstens einem Trägerelement (10) und zumindest einer ersten Rollenlagereinheit (12), welche wenigstens eine erste und eine zweite Rolle (14, 16) zumindest drehbar lagert.

Es wird vorgeschlagen, dass die Rollenlagereinheit (12) bewegbar an dem Trägerelement (10) gelagert ist.

## Beschreibung

Die Erfindung geht aus von einer Solarkraftwerkseinheitlagereinheit nach dem Oberbegriff des Anspruchs 1.

Aus der Druckschrift DE 10 2009 039 021 A1 ist eine Solarkraftwerkseinheitlagereinheit bekannt, welche einen Pylonen aufweist. Der Pylone trägt zwei drehbar gelagert Rollen, welche an einer Lagerung eines Torsionsrohres, welches mit einem Spiegel verbunden ist, mitwirken.

Die Aufgabe der Erfindung besteht insbesondere darin, eine gattungsgemäße Solarkraftwerkseinheitlagereinheit, welche eine hohe Effizienz aufweist, bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Solarkraftwerkseinheitlagereinheit mit wenigstens einem Trägerelement und zumindest einer ersten Rollenlagereinheit, welche wenigstens eine erste und eine zweite Rolle zumindest drehbar lagert.

Es wird vorgeschlagen, dass die Rollenlagereinheit bewegbar an dem Trägerelement gelagert ist. Unter einer "Solarkraftwerkseinheitlagereinheit" soll insbesondere eine Einheit verstanden werden, welche an einer beweglichen Lagerung einer Einheit eines Solarkraftwerks, wie insbesondere eines Paneels mit Solarzellen, zumindest mitwirkt, wobei die Einheit vorzugsweise als Solarkraftwerksspiegeleinheitlagereinheit ausgebildet ist. Unter einer "Solarkraftwerksspiegeleinheitlagereinheit" soll insbesondere eine Einheit verstanden werden, welche an einer beweglichen Lagerung einer Spiegeleinheit eines Solarkraftwerks, welche einen oder mehrere Spiegel aufweisen kann, zumindest mitwirkt. Unter einer "Trägereinheit" soll insbesondere eine Einheit verstanden werden, welche eine Gewichtskraft der Rollenlagereinheit zumindest teilweise aufnimmt, wobei die Einheit vorzugsweise in einem vollständig montierten Zustand diese vollständig oder teilweise aufgenommene Gewichtskraft an den Erdboden weitergibt. Darunter, dass die Rollenlagereinheit eine Rolle "zumindest" drehbar lagert, soll insbesondere verstanden werden, dass die Rollenlagereinheit wenigstens einen Bereich aufweist, zu welchem die Rollenlagereinheit die Rolle drehbar lagert, wobei die Lagerung der Rolle durch die Rollenlagereinheit außerdem eine Bewegung der Rolle zu dem Bereich zulassen kann, welche sich von einer Drehung um eine Achse der Rolle unterscheidet. Mit einer erfindungsgemäßen Ausgestaltung kann eine hohe Effizienz der Solarkraftwerkseinheitlagereinheit erreicht werden. Insbesondere kann bei einer kompakten Bauweise eine optimale Stellung der Rollen zu einem Element des Solarkraftwerks, insbesondere zu einer Torsionsrohreinheit, zu einer Aufnahme von Kräften erreicht werden, wobei die Möglichkeit gegeben ist, dass weitere Rollen an der Aufnahme der Kräfte mitwirken, wodurch geringe Herzsche Pressungen an den einzelnen Rollen und damit eine hohe Lebensdauer erreicht werden können.

Vorzugsweise ist die Rollenlagereinheit drehbar an dem Trägerelement gelagert, wodurch eine einfache und effektive Ausbildung erreicht werden kann.

Ferner wird vorgeschlagen, dass die Solarkraftwerkseinheitlagereinheit zumindest eine zweite Rollenlagereinheit aufweist, welche wenigstens eine dritte Rolle drehbar lagert. Dadurch kann eine Verteilung von aufzunehmenden Kräften auf wenigstens drei Rollen erreicht werden, wodurch insbesondere erreicht werden kann, dass die Rollen aus ungehärteten und damit kostengünstigen Werkstoffen hergestellt werden können. Ferner kann durch den Einsatz von wenigstens drei Rollen insbesondere erreicht werden, dass die einzelnen Rollen kleiner ausgebildet werden können als bei der Verwendung von weniger als drei Rollen, wodurch insgesamt eine kostengünstigere Herstellung erzielt werden kann.

Vorzugsweise weist die erste Rollenlagereinheit wenigstens ein erstes Gelenklager auf, welches die erste Rolle lagert. Dadurch kann eine langlebige Bauweise erreicht werden.

Mit Vorteil ist das Trägerelement einstückig ausgebildet. Unter "einstückig " soll insbesondere aus einem Guss und/oder aus einer Spritzung und/oder nur unter Zerstörung trennbar verstanden werden. Hierdurch kann eine stabile und kostengünstige Bauweise erreicht werden.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt eine perspektivische Ansicht einer erfindungsgemäßen Solarkraftwerkseinheitlagereinheit, welche eine Rohreinheit lagert,
Fig. 2 zeigt eine Seitenansicht der Solarkraftwerkseinheitlagereinheit und der Rohreinheit, wobei ein Teil der Solarkraftwerkseinheitlagereinheit entfernt ist,
Fig. 3 zeigt einen Teilschnitt durch die Solarkraftwerkseinheitlagereinheit und einen Teil der Rohreinheit, und
Fig. 4 zeigt eine schematische Seitenansicht einer Spiegeleinheit eines Solarkraftwerks, welche die Rohreinheit aufweist.

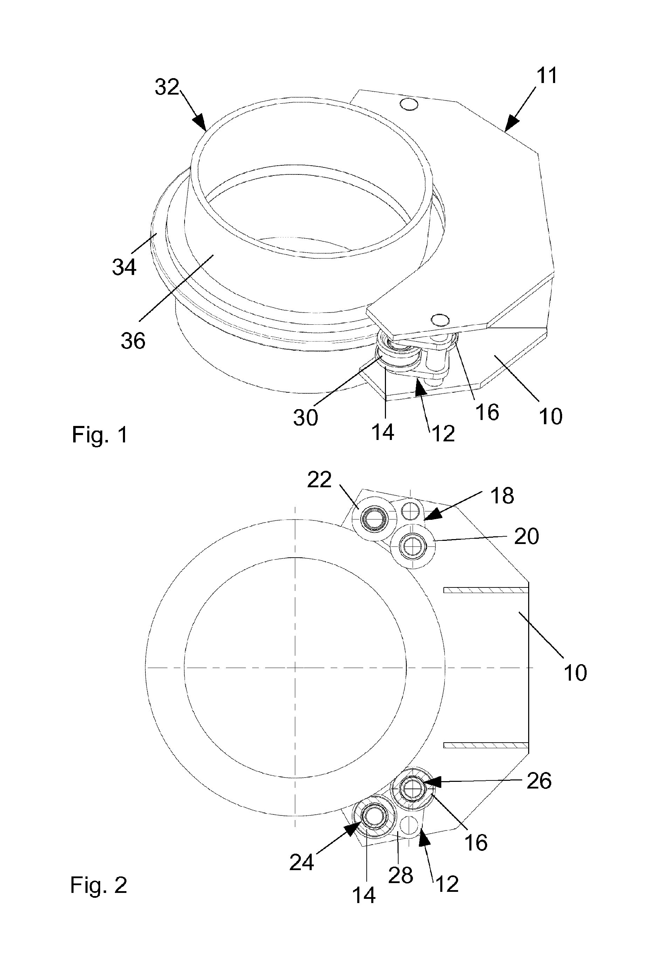

Figur 1 zeigt eine perspektivische Ansicht einer erfindungsgemäßen Solarkraftwerkseinheitlagereinheit, welche als Solarkraftwerksspiegeleinheitlagereinheit ausgebildet ist und welche eine Rohreinheit 32 einer Solarkraftwerksspiegeleinheit lagert lagert. Die Rohreinheit 32 ist entlang ihrer axialen Richtung verkürzt dargestellt. Die Solarkraftwerksspiegeleinheitlagereinheit weist eine Trägereinheit 11 mit einem Trägerelement 10 auf. Ferner weist die Solarkraftwerksspiegeleinheitlagereinheit eine erste und eine zweite Rollenlagereinheit 12,18 auf. Die erste Rollenlagereinheit 12 ist drehbar an dem Trägerelement gelagert. Außerdem ist die zweite Rollenlagereinheit 18 drehbar an dem Trägerelement gelagert (Figur 2). Das Trägerelement ist einstückig ausgebildet. Des Weiteren umfasst die Solarkraftwerksspiegeleinheitlagereinheit vier Rollen 14, 16, 20, 22. Die erste und die zweite Rolle 14,16 sind drehbar durch die Rollenlagereinheit 12 relativ zu einem Trägerbauteil 28 der Rollenlagereinheit 12 gelagert. Die dritte und die vierte Rolle 20, 22 sind drehbar durch die Rollenlagereinheit 18 gelagert. Die Rollenlagereinheiten sind baugleich.

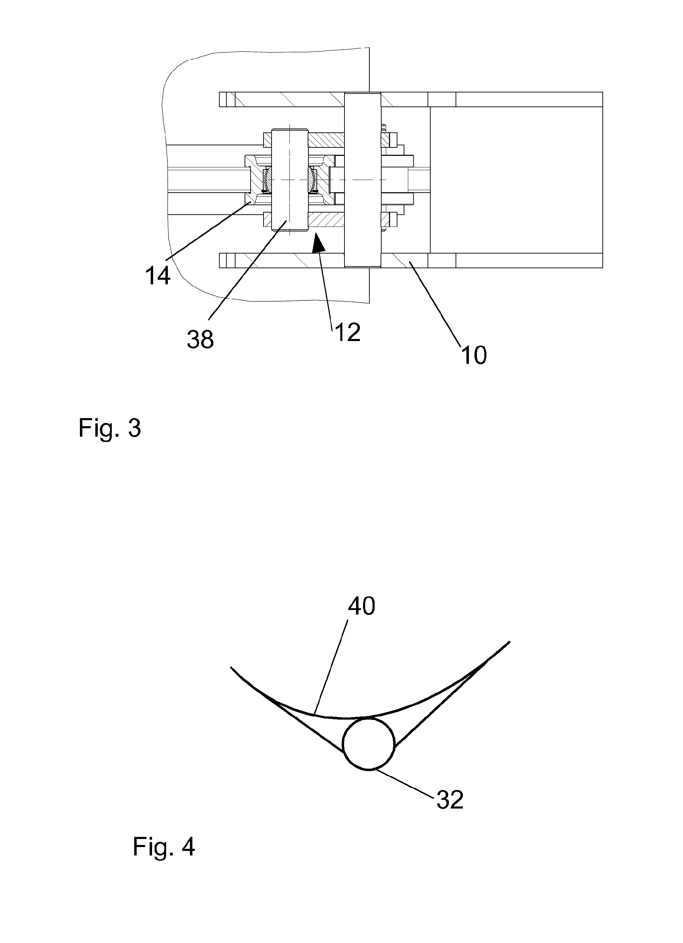

Die Rollenlagereinheit 12 weist ein Gelenklager 24 auf, welches die erste Rolle 14 lagert (Figur 3). Außerdem lagert ein zweites Gelenklager 26 der Rollenlagereinheit 12 die zweite Rolle 16. Jede der Rollen weist eine Nut 30 auf, welche entlang der Umfangsrichtung der jeweiligen Rolle über 360° verläuft. Der Nutgrund der jeweiligen Rolle bildet eine Abrollfläche.

Die Gelenklager sind baugleich. Ein Bolzen 38 des Gelenklagers 24 ist relativ zu dem Trägerbauteil 28 fixiert. Ferner ist ein Bauteil des Gelenklagers 26 relativ zu dem Trägerbauteil 28 fixiert. Ferner ist ein in einer radialen Richtung des Gelenklagers 24 mit einer kugelförmigen Oberfläche versehener Innenring des Gelenklagers 24 an dem Bolzen befestigt. Die Rolle 14 ist an dem Außenring des Gelenklagers 24 befestigt. Der Außenring des Gelenklagers 24 weist in Radialrichtung des Gelenklagers 24 eine Innenfläche auf, welche an der Fläche des Innenrings anliegt, so dass die axiale Richtung der Rolle 12 relativ zu der axialen Richtung des Innenrings verkippbar ist.

Die Rohreinheit 32 weist eine Feder 34 auf, welche entlang der Umfangsrichtung eines Rohrs 36 der Rohreinheit über 360° verläuft und in jede der Nuten eingreift. Durch den Kontakt der Feder und der Nuten werden Kräfte, die auf das Rohr in axiale und radiale Richtung des Rohrs wirken, auf die Rollen übertragen. Die Feder ist an dem Rohr befestigt. Eine durch Erhitzung bewirkte Längenausdehnung der Rohreinheit bewirkt die Verkippung der axialen Richtungen der Rollen. Dadurch kann eine Kantenspannung an den Rollen vermieden werden.

Die Gelenklager enthalten in ihrem Inneren Schmierstoff und sind nach Außen abgedichtet, wodurch die Gelenklager wartungsfrei sind.

Ein Solarkraftwerk weist die in Figur 4 gezeigte Spiegeleinheit, welche die Rohreinheit 32 und Spiegel 40 aufweist, auf. Ferner ist die Solarkraftwerkseinheitlagereinheit Teil des Solarkraftwerks. Der Spiegel ist an der Rohreinheit befestigt. Der Spiegel hat Parabolform und reflektiert Sonnenlicht zur Erhitzung einer Flüssigkeit, die in einer Röhre verläuft.

Das Solarkraftwerk weist eine Pylone auf, an der die Solarkraftwerkseinheitlagereinheit befestigt ist. Die Rohreinheit wird durch mehrere solcher Pylonen und Solarkraftwerkseinheitlagereinheiten gelagert. Aktuatoren können die Rohreinheit und damit den Spiegel relativ zu den Pylonen bewegen.

Trotz starker Verschmutzung, Sonneneinstrahlung, Feuchtigkeit und starken Temperaturschwankungen ist die Solarkraftwerkseinheitlagereinheit langlebig, und zwar beträgt die Lebensdauer mindestens dreißig Jahre. Die Bauweise der Solarkraftwerkseinheitlagereinheit ist kompakt, weil ansonsten der Spiegel verkleinert werden müsste. Durch die beweglichen Lagerungen der Rollen wird ein Gleichmäßiges Anliegen der Rollen an der Rohreinheit und damit eine gleichmäßige Lastverteilung erreicht.

Das in Figur 3 gezeigte Gelenklager kann, insbesondere bei zu erwartenden hohen Axiallasten, durch zwei Schräggelenklager ersetzt sein.

### Bezugszeichenliste

| | |
|---|---|
| 10 | Trägerelement |
| 11 | Trägereinheit |
| 12 | Rollenlagereinheit |
| 14 | Rolle |
| 16 | Rolle |
| 18 | Rollenlagereinheit |
| 20 | Rolle |
| 22 | Rolle |
| 24 | Gelenklager |
| 26 | Gelenklager |
| 28 | Trägerbauteil |
| 30 | Nut |
| 32 | Rohreinheit |
| 34 | Feder |
| 36 | Rohr |
| 38 | Bolzen |
| 40 | Spiegel |

## Patentansprüche

1. Solarkraftwerkseinheitlagereinheit, insbesondere Solarkraftwerksspiegeleinheitlagereinheit, mit wenigstens einem Trägerelement (10) und zumindest einer ersten Rollenlagereinheit (12), welche wenigstens eine erste und eine zweite Rolle (14, 16) zumindest drehbar lagert, wobei die Rollenlagereinheit (12) bewegbar an dem Trägerelement (10) gelagert ist und wobei die erste Rolle (14) an einem Außenring eines Gelenklagers (24) befestigt ist.

2. Solarkraftwerkseinheitlagereinheit nach Anspruch 1, **gekennzeichnet durch** zumindest eine zweite Rollenlagereinheit (18), welche wenigstens eine dritte Rolle (20) drehbar lagert.

3. Solarkraftwerkseinheitlagereinheit nach Anspruch 2, **dadurch gekennzeichnet, dass** die zweite Rollenlagereinheit (18) wenigstens eine vierte Rolle (22) drehbar lagert.

4. Solarkraftwerkseinheitlagereinheit nach einem der vorherigen Ansprüche, **dadurch gekennzeichnet, dass** die erste Rollenlagereinheit (12) wenigstens ein erstes Gelenklager (24) aufweist, welches die erste Rolle (14) lagert.

5. Solarkraftwerkseinheitlagereinheit nach Anspruch 4, **dadurch gekennzeichnet, dass** die erste Rollenlagereinheit (12) zumindest ein zweites Gelenklager (26) aufweist, welches die zweite Rolle (16) lagert.

6. Solarkraftwerkseinheitlagereinheit nach Anspruch 5, **dadurch gekennzeichnet, dass** die erste Rollenlagereinheit (12) wenigstens ein einstückig ausgebildetes Trägerbauteil (28) aufweist, relativ zu welchem wenigsten ein Teil des ersten Gelenklagers (24) und zumindest ein Teil des zweiten Gelenklagers (26) fixiert ist.

7. Solarkraftwerkseinheitlagereinheit nach einem der vorherigen Ansprüche, **dadurch gekennzeichnet, dass** wenigstens eine der Rollen (14, 16) eine Nut (30) aufweist, welche sich entlang einer Umfangsrichtung der Rolle (14, 16) erstreckt.

8. Solarkraftwerkseinheitlagereinheit nach einem der vorherigen Ansprüche, **dadurch gekennzeichnet, dass** das Trägerelement (10) einstückig ausgebildet ist.

9. Solarkraftwerk mit wenigstens einer Solarkraftwerkseinheitlagereinheit nach einem der vorherigen Ansprüche.

10. Solarkraftwerk nach Anspruch 9, **gekennzeichnet durch** wenigstens eine Rohreinheit (32), an welcher zumindest ein Spiegel des Solarkraftwerks befestigt ist und welche zumindest eine Feder (34) aufweist, welche in zumindest eine Nut (30) einer der Rollen (14, 16) der Solarkraftwerkseinheitlagereinheit eingreift.
